# EUROPÄISCHE PATENTSCHRIFT

(11) **EP 1 901 045 B1**
(45) Veröffentlichungstag und Bekanntmachung des Hinweises auf die Patenterteilung: **17.04.2013**
(21) Anmeldenummer: 07017702.7
(22) Anmeldetag: 11.09.2007
(51) Int. Cl.: G01J 1/08, G01J 1/04

(54) **Vorrichtung zur mehrstufigen Dämpfung einfallender Strahlungsenergie**
Device for multi-stage attenuation of incident radiation energy
Dispositif d'atténuation en plusieurs étapes d'énergie rayonnante incidente

(30) Priorität: 13.09.2006 DE 102006043385
(43) Veröffentlichungstag der Anmeldung: 19.03.2008
(73) Patentinhaber: Jena-Optronik GmbH, 07745 Jena (DE)
(72) Erfinder: Fritsch, Holger Dr., 07749 Jena (DE); Voß, Burkart Dr., 07778 Dorndorf-Steudnitz (DE)
(74) Vertreter: Freitag, Joachim

(56) Entgegenhaltungen:
- DE-A1- 1 903 122
- DE-A1- 3 601 537
- DE-C1- 19 522 605
- GB-A- 2 347 998
- US-A- 3 700 335
- US-A1- 2003 127 585
- "Optics Guide 3" 1985, Melles Griot , XP002561898 ISBN: 0933993005 * Seite 250 - Seite 251 * * Seite 458 *

## Beschreibung

Die Erfindung betrifft eine Vorrichtung zum radiometrischen Kalibrieren von optoelektronischen Sensoren, die zur Bestimmung ihrer Empfindlichkeit über einen Kalibrierstrahlengang von einer Referenzstrahlungsquelle beaufschlagt sind, wobei in den Kalibrierstrahlengang verschiedene Filter unterschiedlicher Transmission zur Realisierung stufenwelse definierte unterschiedlicher Dämpfungszustände der Referenzstrahlung einbringbar sind.
Sie ist insbesondere zur Kalibrierung von bildgestützten Instrumenten zur Fernerkundung der Erde geeignet, bietet jedoch auch vielfältige Anwendungsmöglichkeiten für eine definierte Strahlungsdämpfung von Lichtquellen und Kalibrierung von beliebigen Sensorsystemen.

Raumfahrtinstrumente für die Erdbeobachtung (Erdfernerkundung) enthalten zunehmend auch optische Bildsensorsysteme. Unter Sensorsystem soll im Folgenden die gesamte Anordnung aus Optik, Bildwandler (Bildsensor) und nachgeschalteter Elektronik (Front End Electronic) verstanden werden.

Um eine bestimmte Genauigkeit von Bildsensoren sicherzustellen, muss ihre Empfindlichkeit kalibriert werden. Prinzipiell kann dieser Kalibriervorgang auf der Erde oder im Flug erfolgen. Wegen besonderer Strahlenbelastung im Weltall und allgemein bekannter Empfindlichkeitsänderungen durch Alterung geht man jedoch zur wiederholten Kalibrierung während des Sensorbetriebes über. Zur Kalibrierung benötigt man in der Regel eine Strahlungsquelle bekannter Intensität. Dies können künstliche Quellen, wie Lampen o.ä. sein. Alternativ bietet sich die Sonne als natürliche Kalibrierquelle an.

Als Kalibrierquelle im Weltall wird wegen ihrer ständigen Verfügbarkeit, der hohen Strahlungskonstanz und der großen spektralen Bandbreite vornehmlich die Sonne verwendet
Als Gegenpol für die Bestimmung des Dunkelsignals des Sensors kann - als Alternative zu einem vollkommen abgedeckten Sensor - eine Quelle mit zu vernachlässigender Strahlungsintensität, beispielweise die reflektierte Strahlung (bis ca. 3 µm) einer Wasseroberfläche bei Nacht verwendet werden, wobei in diesem Fall bereits sämtliches in den Strahlengang (Lichtschacht) des optischen Systems einfallendes Streulicht mit berücksichtigt wird.

Durch die Erfassung der Sensorwerte bei abwechselnder Bestrahlung aus den beiden letztgenannten Quellen erhält man eine absolute Zweipunktkalibrierung. Da mit zwei Kalibrierpunkten nur eine lineare Funktion beschreibbar ist, werden hohe Anforderungen an die Linearität des Sensorsystems gestellt. Jede Nichtlinearität des Sensorverhaltens schlägt sich in Messfehlern nieder.
Übliche Kalibriereinrichtungen in Raumfahrtinstrumenten erfassen häufig nicht das gesamte Sensorsystem. Oft wird die Strahlung der Referenzquelle derart in das Sensorsystem eingebracht, dass nur Teile der Optik mitkalibriert werden.

Für Instrumente mit großer Abtastbreite werden häufig längliche Lichteintrittsöffnungen verwendet. Deren Größe und Geometrie erschweren den Einsatz von aperturfüllenden Filterrädern, Diffusern und ähnlichen Kalibrierelementen.
Für eine Mehrpunktkalibrierung, die unter stationären Bedingungen auf der Erde durchaus üblich ist, werden zusätzliche Lichtquellen (z.B. Kalibrierlampen) oder geeignete Filterräder benötigt, die den Aufwand enorm steigern und stets einer fortscheitenden Alterung und/oder Kontamination unterliegen. Da in der Raumfahrt ein Austausch oder eine Reinigung solcher Komponenten nicht möglich ist, kann eine Mehrpunktkalibrierung nicht zuverlässig realisiert werden.

In der DE 195 22 605 C1 ist eine Vorrichtung zur alternierenden Freigabe von Strahlenbündeln für Kalibrierzwecke offenbart, bei der das Messstrahlenbündel in Nadirstellung durch übereinstimmende Fensteröffnungen im Mantel zweier ineinander konzentrisch angeordneter Hohlzylinder zum Strahlungsempfänger durchgelassen wird. Für die Kalibrierung ist einer der Hohlzylinder mittels Schrittmotor in zwei unterschiedliche Kalibrierstellungen drehbar und gibt in einer ersten Drehstellung ein zum Messstrahlenbündel orthogonales Referenzstrahlenbündel frei, das über einen reflektierenden Diffusor auf den Strahlungsempfänger umgelenkt wird, und verschließt in einer zweiten Drehstellung die Öffnung zum Strahlungsempfänger zur Messung des Dunkelstroms. Nachteilig ist hierbei das lediglich eine Zweipunktkalibrierung mit ihren oben beschriebenen Nachteilen möglich ist.

Als zum technischen Hintergrund der Erfindung beitragender Stand der Technik sind die US 3,700,335 A, bei der mit mehrstufiger Dämpfung des Messstrahlengangs einer Apparatur zur Dichtemessung von Flüssigkeiten lediglich der Sensormessbereich erweiterbar oder umschaltbar ist, die Monographie "Optics Guide 3" (Melles Griot, ISBN: 0-933993-00-5), aus der die multiple Anwendung verschiedener Filter (u.a. ND-Filter) entnehmbar ist, sowie die GB 2 347 122 A, bei der für die Messung der Intensität energiereicher Strahlenbündel (z.B. Laserspot) mittels mehrstufiger Strahlungsdämpfung aus Massenstreuelementen, Dämpfungselementen und Elementen mit radialem Gradienten des Streuverhaltens (z.B. mit radial abhängiger Lochdichte) auch die Strahlrichtung berücksichtigt wird, zu nennen.

In der DE 3601 537 A1 ist eine für die Erfindung gattungsbildende Anordnung zum radiometrischen Kalibrieren von optoelektronischen Sensoren beschrieben, bei der die Sensoren zur Bestimmung ihrer Empfindlichkeitscharakteristik im Weltraum von einer Referenzstrahlungsquelle (Sonne) beaufschlagt werden und mehrere Diffusoren mit unterschiedlicher Transmission, die auf einem flexiblen bandförmigen Träger nacheinander angeordnet sind, in den Referenzstrahlengang eingefahren werden, um eine Mehrpunktkalibrierung der Sensoren zu ermöglichen. Nachteilig hieran ist die notwendige Vielzahl bewegter Teile zum geordneten Einbringen der unterschiedlichen Transmissionsfilter sowie die Alterung/Degradation des bandförmigen Trägers und der darauf befindlichen diffusen Graufilter, die für Kalibriervorgänge im Weltraum über große Zeiträume nicht tolerierbar sind.

Ferner ist in der JP 03-115816 A ("Apparatus for calibration on orbit of radiometer") eine weitere Mehrpunktkalibrierung für ein weltraumtaugliches Radiometer beschrieben, bei der mit einem "die Permeabilität variierenden Gerät" (in zwei stabilen Zuständen) die Signalstärke zwischen Lichtquelle und Detektor geändert wird. Die Lichtquelle selbst ist steuerbar, so dass eine Mehrpunktquelle ermöglicht wird. Sie weist allerdings den Nachteil der bereits oben erwähnten Alterung auf, die praktisch blind kompensiert oder ebenfalls kalibriert werden müsste. Außerdem hat ein Ausfall der Referenzlichtquelle den Verlust der Kalibrierfähigkeit des Sensors zur Folge.

Der Erfindung liegt die Aufgabe zugrunde, eine neue Möglichkeit zur definierten mehrstufigen Dämpfung einer Konstantlichtquelle zu finden, die mit einfachen Mitteln eine zuverlässige und langzeitstabile reproduzierbare Einstellung von definierten Strahlungszuständen, insbesondere für die Mehrpunktkalibrierung von Sensoren, gestattet.

Erfindungsgemäß wird die Aufgabe bei gattungsgemäßen Anordnung zur mehrstufigen Dämpfung einfallender Strahlungsenergie durch die Merkmale des Anspruchs 1 gelöst. Vorteilhafte Ausführungen sind in den untergeordneten Ansprüchen beschrieben.

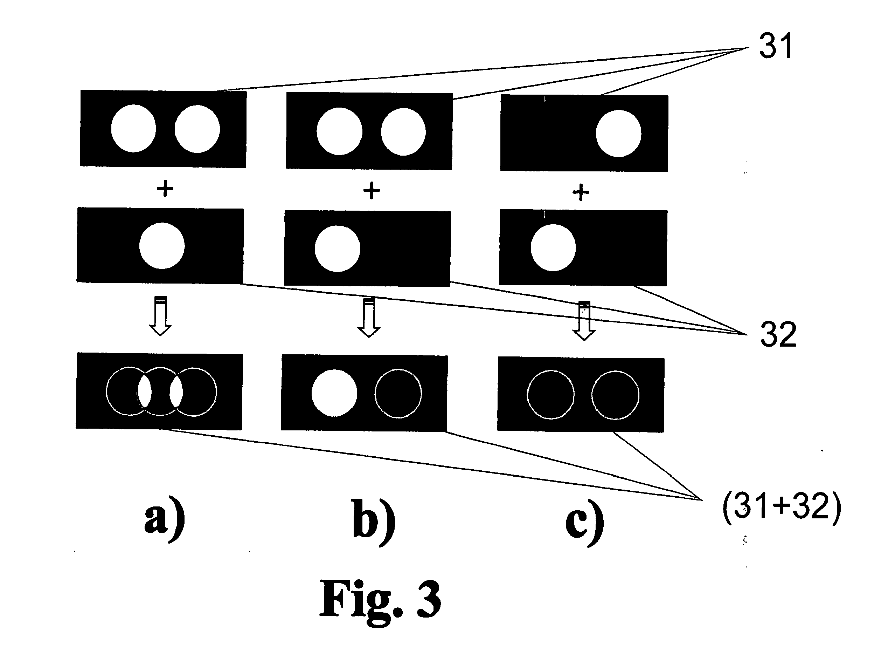

Die Erfindung basiert auf der Grundüberlegung, dass für eine Mehrpunktkalibrierung die einfallende Strahlungsenergie einer Referenzquelle stufenweise definiert und reproduzierbar abgeschwächt werden muss. Falls nur eine einzige (konstante) Referenzlichtquelle zur Verfügung steht, kann die Lichtdämpfung z.B. durch unterschiedliche Filter mit bekannter Transmission erfolgen, die auch in Kombination miteinander zur Einstellung verschiedener Transmissionszustände angewendet werden können, um die Anzahl der erforderlichen Filter für eine vorgegebene Anzahl von Dämpfungszuständen der Referenzlichtquelle zu minimieren.
Eine besonders robuste Möglichkeit zur Gestaltung von Transmissionsfiltern sind gelochte Platten, deren Transmission über das Verhältnis der aufsummierten Lochflächen zur Gesamtfläche definiert ist (Fig. 3b). Anstelle gelochter Platten sind auch andere Varianten der mechanischen Formgebung (z.B. Schlitze, Rechtecke etc.) möglich.
Ebenfalls anwendbar ist eine zu den Lochplatten inverse Variante durch opake Flächenelemente (bzw. Flächen geringer Transmission) auf einem Substrat hoher Transmission (Fig. 3c).
Zur Erzielung einer homogenen Lichtverteilung, die z.B. zur Kalibrierung eines (Bild-) Sensors zwingend erforderlich ist, müssen die vorgenannten Filterplatten mit einem Diffusor kombiniert werden. Dabei kann der Diffusor transmittierend sein, wobei er in diesem Fall besonders vorteilhaft (z.B. als Substratplatte) mit den Filterplatten vereinigt sein kann. Andererseits kann der Diffusor auch als reflexives Element ausgeführt sein und dabei zugleich für die Einkopplung des Referenzlichts in den zu kalibrierenden Messstrahlengang des Sensors verwendet werden.
Für weltraumtaugliche Anwendungen werden die lichtdämpfenden Platten vorteilhaft direkt in einen Referenzstrahlengang, der von der Sonne als Referenzlichtquelle Gebrauch macht, als klappbare oder einschiebbare Eingangsdeckel konstruiert.

Mit der erfindungsgemäßen Lösung ist es möglich, eine definierte mehrstufige Dämpfung einer Konstantlichtquelle zu realisieren, die mit einfachen Mitteln zuverlässig und langzeitstabil reproduzierbare Einstellungen von definierten Strahlungszuständen, insbesondere für die Mehrpunktkalibrierung von Sensoren, gestattet.
Eine erfindungsgemäße Mehrpunktkalibrierung erlaubt eine genauere Kalibrierung bei geringeren Anforderungen an die Linearität der Sensoren.

Die Erfindung soll nachstehend anhand von Ausführungsbeispielen näher erläutert werden. Die Zeichnungen zeigen:
- Fig. 1:: eine Prinzipansicht der erfindungsgemäßen Vorrichtung mit Filterplatten und Diffusor in einem Referenzstrahlengang zwischen Konstantlichtquelle und Sensor,
- Fig. 2:: drei grundlegende Varianten zur Gestaltung von erfindungsgemäßen Filterplatten in Form eines Transmissionsfilters (a), einer Lochplatte (b) und eines transparenten Substrats mit opaken geometrischen Strukturen (c),
- Fig. 3:: eine Darstellung des Grundprinzips der Überlagerung von Filterplatten mit transparenten und nicht transparenten Flächenanteilen am Beispiel von Lochplatten,
- Fig. 4:: eine Darstellung zweier Ausführungen eines transmittierenden Diffusors in Form von Substraten für (a) ein herkömmliches Transmissionsgraufilter und (b) für eine Filterplatte mit opaken geometrischen Strukturen nach Fig. 2c ,
- Fig. 5:: eine perspektivische Darstellung des erfindungsgemäßen Referenzstrahlengangs mit zwei einklappbaren Transmissionsfilterplatten unterschiedlicher Transmission und einschwenkbarem reflexiven Diffusor zum alternativen Verschließen des Referenzstrahlengangs (bei funktionsfähigem Abbildungsstrahlengang) und des Abbildungsstrahlengangs (bei eingekoppeltem Referenzstrahlengang),
- Fig. 6:: eine schematische Seitenansicht der Erfindung für ein Instrument zu Erdfernerkundung mit stilisierter Darstellung des Abbildungsstrahlengangs (a) und Mehrpunktkalibrierung mit ausgeklappten Filterplatten für eine ungedämpfte Einkopplung des Sonnenlichts als Referenzstrahlungsquelle,

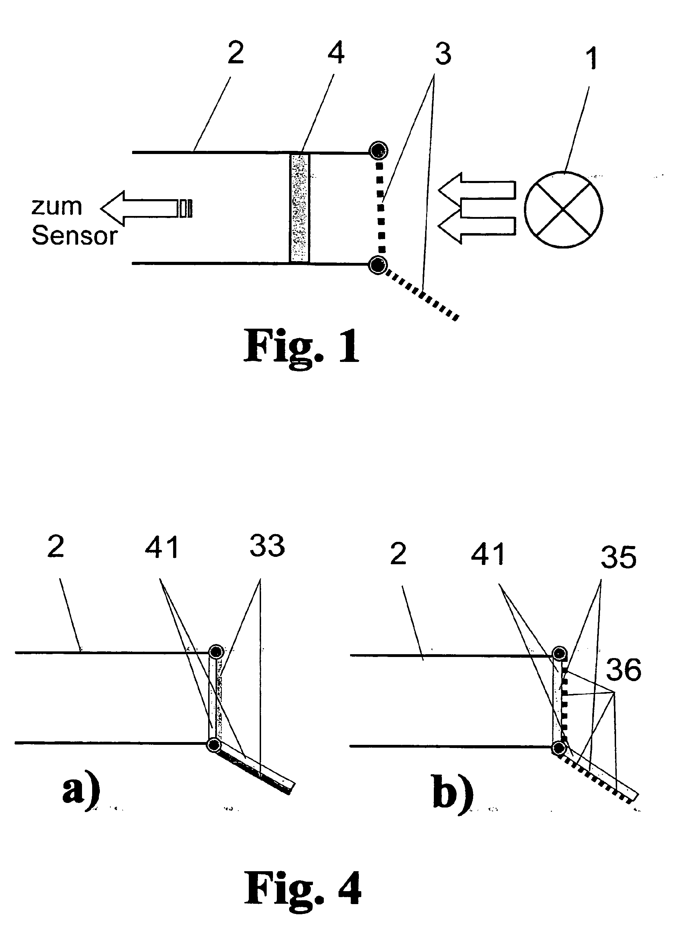

Die erfindungsgemäße Grundvorrichtung besteht zur Realisierung stufenweise definierter Dämpfungszustände der einfallenden Strahlungsenergie einer Konstantlichtquelle (Referenzlichtquelle 1, vorzugsweise die Sonne) aus einem Lichtschacht 2 (Baffle) und mindestens zwei einfügbaren Filterplatten 31 und 32 mit bekannter vorzugsweise unterschiedlicher Transmission sowie einem lichtstreuenden Diffusor 4. Um mehrere verschiedene Dämpfungszustände einzustellen, werden die Filterplatten 31 und 32 einzeln nacheinander und gemeinsam in den Strahlengang vor dem Lichtschacht 2 eingeschwenkt. Alternativ können die Filterplatten 31 und 32 auch in den Lichtschacht 2 lateral eingeschoben werden.
In dieser Konstellation, vorausgesetzt der Lichtschacht 2 kann auch ganz verschlossen werden (in Fig. 1 nicht dargestellt), ergeben zwischen der 0%- und 100%-Transmission bereits drei unterschiedliche Dämpfungszustände, die je nach Wahl der Einzeltransmissionen der Filterplatten 31 und 32 beliebig eingestellt werden können.

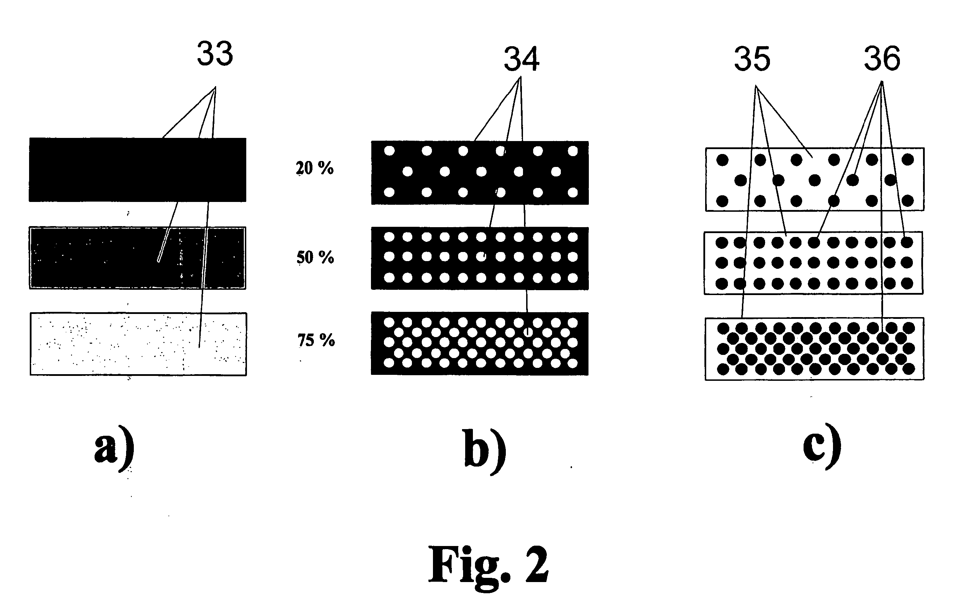

Eine erste Gestaltungsmöglichkeit der Filterplatten 31 und 32 ist in Fig. 2a dargestellt. Hier sind unterschiedliche Dämpfungsgrade durch herkömmliche Transmissionsgraufilter 33 eingestellt und stilisiert mit einer Transmission von 20, 50 und 75 Prozent dargestellt.

Eine sehr robuste Realisierung der Filterplatten 31 und 32 stellen gestanzte oder gebohrte Lochplatten 33 dar, deren Transmission über das Verhältnis der aufsummierten Lochflächen zur Gesamtfläche definiert ist, wie man qualitativ aus Fig. 2 entnehmen kann.
Anstelle von Lochplatten 34 sind auch andere Varianten der mechanischen Formgebung (z.B. Schlitze, Rechtecke etc.) möglich.
Ebenfalls vorteilhaft anwendbar ist eine zu den Lochplatten 34 inverse Gestaltung durch auf einer transparenten Platte 35 aufgebrachte opake Flächenelemente 36 (bzw. Flächen geringer Transmission), wie sie in Fig. 2c dargestellt ist.

Ein Vorteil der Transmissionsgraufilter 33 ist ihre räumliche Homogenität und die Möglichkeit, diese sogleich mit einem Diffusor 4 zu kombinieren. Allerdings ist bei Transmissionsfilterplatten 33 zu beachten, dass sich ihr Transmissionsgrad über längere Zeiträume (z.B. bei erhöhter UV-Belastung im All) eventuell verändern kann. Derartige Veränderungen sind bei den Lochplatten 34 nicht möglich und bei transparenten Platten 35 mit opaken Flächenelementen 36 nach Fig. 2c recht unwahrscheinlich.
Die strukturbedingte Inhomogenität der Transmission über die Fläche der Lochplatten 34 ist von sekundärer Bedeutung, wenn im nachgeordneten Strahlengang ein Diffusor 4 angeordnet ist, der für eine homogene Lichtverteilung vor dem Eintritt in den Strahlengang eines zu kalibrierenden Sensors (nicht dargestellt) sorgt.

Um eine Mehrpunktkalibrierung zu gewährleisten, müssen verschiedene Platten in den Strahlengang gebracht werden können. Dabei kann es sich um einzelne Platten oder auch um Kombinationen von einzelnen Platten handeln.
Bei Kombination mehrerer Transmissionsgraufilter 33 (gemäß Fig. 2a) ergibt sich die Gesamttransmission aus der multiplikativer Überlagerung der Einzeltransmissionen. Bei Lochplatten (gemäß Fig. 2b) und transparenten Platten 35 mit opaken Flächenmustern 36 (gemäß Fig. 2c) ist die Gesamttransmission eine subtraktive Überlagerung der Transmissionflächen, die von der relativen Lage der transparenten Flächen (z.B. Lochfelder) der einzelnen Platten 34 oder 35 zueinander abhängig ist (siehe Fig. 3).

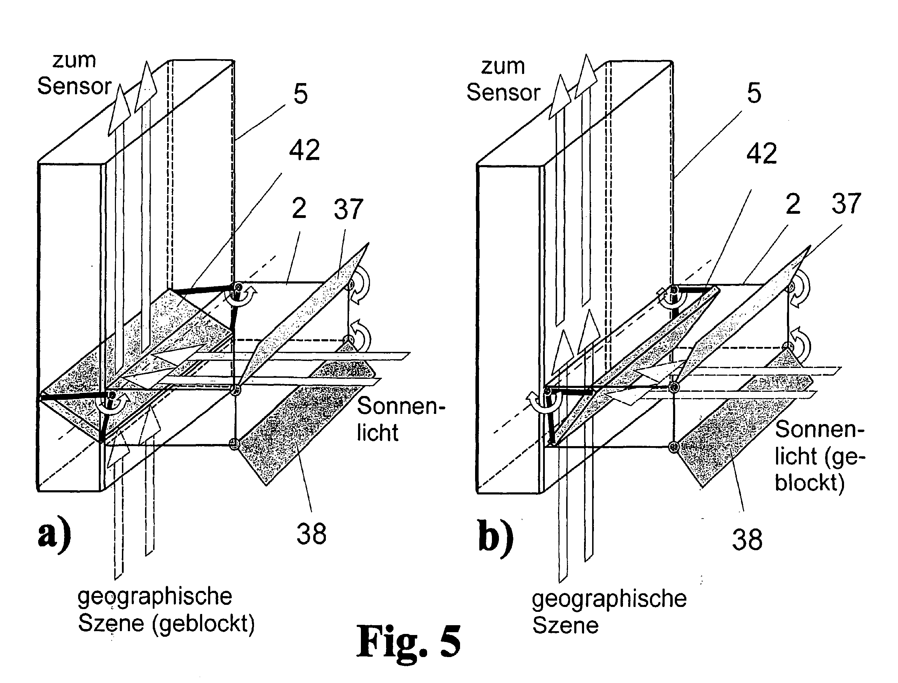

Die mechanische Umsetzung der beschriebenen Lösung kann auf unterschiedlichste Art erfolgen. Ein Ausführungsbeispiel zeigt Fig. 5, bei dem ein Referenzlichtschacht 2 mit schwenkbaren Filterplatten 31 und 32 einzeln oder in Überlagerung abgedeckt wird. Prinzipiell anwendbar sind aber auch Filter-/Lochplattenräder oder Einschubsysteme.

Um eine homogene Ausleuchtung im Lichtschacht 2 zur Kalibrierung eines Sensorsystems zu erreichen, muss das von den Filterplatten 31 und 32 durchgelassene Licht über einen Diffusor 4 gestreut werden. Dabei kann ein transmittierender Diffusor 41 oder ein reflexiver Diffusor 42 zum Einsatz kommen.

Da es das Ziel jeder Kalibrierung sein sollte, das komplette Sensorsystem mit der gesamten lichtsammelnden Optik zu kalibrieren, sind aperturfüllende Diffusorelemente einzusetzen. Solche Diffuser 4 können auf beliebige Weise in den Strahlengang vor der Eintrittspupille gebracht werden. Denkbar sind einschiebbare oder drehbare Streufilter, schwenkbare Klappen u.ä..

Wird der Diffusor 4 als transmittierender Diffusor 41 ausgeführt, so ist er direkt mit den Filterplatten 31 und 32 kombinierbar, d.h. es können Filterplatten 31 und 32 zum Einsatz kommen, die einerseits eine bestimmte bekannte Transmission und andererseits Diffusoreigenschaften besitzen.
Eine Kombination mit Lochplatten 34 ist ebenfalls möglich. Natürlich kann ein transmittierender Diffusor 4 (z.B. als einfache Streuscheibe) auch nach den Filterplatten 31 und 32 (z.B. in Form der Lochplatten 34) angeordnet sein (Fig. 4a und b). Der Diffusor 41 darf sich aber nicht im Abbildungsstrahlengang eines Sensors befinden, wenn dieser sich nicht im Kalibriermodus befindet. D.h. ein transmittierender Diffusor 41 darf nur im Lichtschacht 2 des Referenzstrahlengangs zur Kalibrierung eingesetzt sein oder er darf nur vorübergehend im Kalibriermodus in den Abbildungsstrahlengang eingeschwenkt werden. Der Referenzstrahlengang wird lateral, vorzugsweise orthogonal, zum Abbildungsstrahlengang, der im Lichtschacht 5 dem Sensorsystem (nicht dargestellt) zugeleitet. Die Einkopplung in den Lichtschacht 5 des Abbildungsstrahlengangs (nur in Fig. 5 dargestellt) erfolgt über einen die Apertur des Lichtschachts 5 ausfüllenden einschwenkbaren Spiegel konstruktiv und funktionell so, wie für den reflexiven Diffusor 42 in Fig. 5 gezeigt.

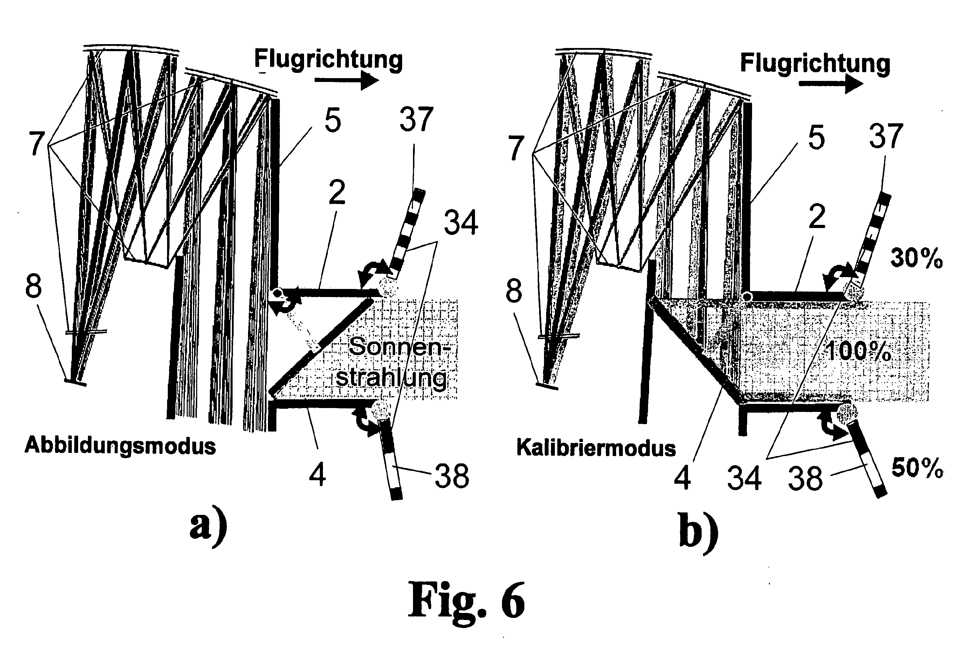

Wird ein reflexiver Diffusor 42 verwendet, so bietet es sich förmlich an, dass dieser die oben beschriebene Spiegelfunktion für die Einkopplung des Referenzstrahlengangs in den Abbildungsstrahlengang mit übernimmt. Im Normalbetrieb, während der Bilderfassung, kann der Diffusor 42 dazu dienen, den Lichtschacht 2 der Referenzlichtquelle zu verschließen, wie in der Darstellung von Fig. 5b gezeigt. Damit werden unerwünschte Streulichteffekte vermieden. Im Kalibriermode gemäß Fig. 5a wird dagegen der reflexive Diffusor 42 zur Referenzlichteinkopplung in den Lichtschacht 5 des Abbildungsstrahlengangs eingeschwenkt und füllt dessen Apertur vollständig aus.
Der Lichteintritt in den Referenzlichtschacht 2 für das hier als Referenzlichtquelle 1 verwendete Sonnenlicht ist mit zwei schwenkbaren Filterklappen 37 und 38 versehen, die jeweils einzeln zur vollständigen Abdeckung der Eintrittsöffnung in der Lage sind. Durch einzelnes Einklappen sowie Kombination (Übereinanderklappen) der zwei Filterklappen 37 und 38 können drei unterschiedliche Transmissionsgrade eingestellt werden, wie unten noch zu Fig. 6 an einem konkreten Beispiel für Transmissionsgraufilter 33 beschrieben wird.

Fig. 6 zeigt für ein optisch abbildendes Instrument zur Fernerkundung der Erde den Lichteintritt (Lichtschacht 5) für den Abbildungsstrahlengang mit einer Kalibriervorrichtung gemäß der Erfindung in einer Seitenansicht zur Flugrichtung des Instruments betrachtet. Für Instrumente mit großer Abtastbreite werden längliche Lichteintrittsöffnungen des Lichtschachtes 5 (Baffle) benötigt. Der Lichtschacht 5 hat deshalb einen stark rechteckigen Querschnitt.

Um die Kalibrierung des Sensorsystems, d.h. des Sensors 8 inklusive nachgeschalteter Elektronik (Front End Electronic) sowie aller Komponenten der abbildenden Spiegeloptik 7, also vor einem ersten Spiegel der Optik des Sensorsystems (wie stilisiert in Fig. 6 dargestellt) über die ganze Abtastbreite zu ermöglichen, muss ein rechteckiger reflexiver Diffusor 42 in den Lichtschacht 5 des Abbildungsstrahlengangs geklappt werden, der diesen vollständig (aperturfüllend) ausfüllt.

Vor dem Referenzlichtschacht 2 (mit Einfall von der Sonnenlicht) werden zwei klappbare Filterplatten 31 und 32 (in Form von Graufiltern 33 oder Lochplatten 34) mit einer unterschiedlichen Lichtdurchlässigkeit befestigt. Die so definierten Filterklappen 37 und 38 decken im eingeklappten Zustand jeweils die volle Eintrittsöffnung des Referenzlichtschachtes 2 ab. Sie können außerdem gleichzeitig übereinander geklappt werden.
Weist die obere Filterkappe 37 eine Transmission von 30% und die untere Filterklappe 38 eine Transmission von 50 % auf, lassen sich folgende Abstufungen der Dämpfung der einfallenden Sonnenstrahlung erreichen:

| | |
|---|---|
| beide Filterklappen 37 und 38 offen: | 100 % |
| Filterklappe 38 geschlossen: | 50 % |
| Filterklappe 37 geschlossen: | 30 % |
| beide Filterklappen 37 und 38 geschlossen: | 15 % |
| Referenzlichtschacht 2 mit umgeklapptem Diffusor 42 geschlossen: (Abbildungsmode bei Nacht über offenem Meer = Dunkelsignal) | 0 % |

Damit ist im konkreten Beispiel eine Fünfpunktkalibrierung realisiert, die insbesondere den lichtschwachen Empfindlichkeitsbereich der Elemente des Sensors 8 genauer kalibriert, was für Aufgaben der Fernerkundung der Erde von besonderer Bedeutung ist.

### Bezugszeichenliste

- 1: Referenzlichtquelle

- 2: Referenzlichtschacht

- 3: Filterplatte
- 31, 32: Filterplatten mit unterschiedlicher Transmission
- 33: Graufilterplatte
- 34: Lochplatte
- 35: transparentes Substrat mit opaken Flächenelementen
- 36: opake Flächenelemente
- 37: obere Filterklappe
- 38: untere Filterklappe

- 4: Diffusor
- 41: transmittierender Diffusor
- 42: reflexiver Diffusor

- 5: Lichtschacht (des Abbildungsstrahlengangs)

- 7: Spiegeloptik des Sensorsystems

- 8: Sensor

## Patentansprüche

1. Vorrichtung zum radiometrischen Kalibrieren von optoelektronischen Sensoren, die zur Bestimmung ihrer Empfindlichkeit über einen Kalibrierstrahlengang von einer Referenzstrahlunsquelle beaufschlagt sind, bestehend aus verschiedene Filter unterschiedlicher Transmission zur Realisierung stufenweise definierter unterschiedlicher Dämpfungszustände der einfallenden Referenzstrahlung die in den Kalibrierstrahlengang einbringbar sind, **dadurch gekennzeichnet, dass** die Vorrichtung ein Referenzlichtschacht beinhaltet, und dass
die Filter als begrenzte Anzahl von Filterplatten , die als schwenkbare Filterklappen ausgebildet sind, (3; 31, 32) mit systematisch abgestuft hergestellten Transmissionsstrukturen in dem Referenzlichtschacht (2), der den Kalibrierstrahlengang begrenzt, aperturfüllend hintereinander einschwenkbar sind, so dass die Filter jeweils einzeln und in Kombinationen miteinander eine Anzahl von definierten, reproduzierbar abgestuften Dämpfungszuständen des Lichts der Referenzstrahlungsquelle (1), die die Anzahl der Filterplatten (3; 31, 32) übersteigt, erzeugen.

2. Vorrichtung nach Anspruch 1, **dadurch gekennzeichnet, dass** die Filterplatten Lochplatten (34) sind.

3. Vorrichtung nach Anspruch 1, **dadurch gekennzeichnet, dass** die Filterplatten transparente Platten (35) mit opaken Flächenelementen (36) sind.

4. Vorrichtung nach Anspruch 1, **dadurch gekennzeichnet, dass** den Filterplatten ein Diffusor (4) nachgeordnet ist.

5. Vorrichtung nach Anspruch 4, **dadurch gekennzeichnet, dass** der Diffusor (4) ein transmittierender Diffusor (41) ist.

6. Vorrichtung nach Anspruch 4, **dadurch gekennzeichnet, dass** der Diffusor (4) ein reflexiver Diffusor (42) ist.

7. Vorrichtung nach Anspruch 1, **dadurch gekennzeichnet, dass** die Filterplatten (3; 31, 32) an einem Ende des Kalibrierlichtschachtes (2) einklappbar befestigt sind.

8. Vorrichtung nach Anspruch 1, **dadurch gekennzeichnet, dass** der Kalibrierlichtschacht (2) orthogonal zu einem Messlichtschacht (5) eines optischen Sensorssystems (7, 8) angeordnet ist, wobei der Kalibrierlichtschacht (2) vor allen optischen Komponenten (7) des Sensors (8) mittels eines schwenkbaren reflektierenden Elements in den Messlichtschacht (5) einkoppelbar ist, so dass das Sensorsystem (7, 8) in einem Kalibriermodus alternativ mit Kalibrierlicht mehrerer verschiedener Dämpfungszustände der Referenzlichtquelle (1) beleuchtet wird.

9. Vorrichtung nach Anspruch 8, **dadurch gekennzeichnet, dass** das schwenkbare reflektierende Element ein Spiegel ist.

10. Vorrichtung nach Anspruch 8, **dadurch gekennzeichnet, dass** das schwenkbare reflektierende Element ein reflexiver Diffusor (42).

11. Vorrichtung nach Anspruch 8, **dadurch gekennzeichnet, dass** das schwenkbare reflektierende Element im Messmodus angepasst an Querschnittsform und Größe des Kalibrierlichtschachtes (2) aperturfüllend in den Kalibrierlichtschacht (2) einklappbar ist.

12. Vorrichtung nach Anspruch 8, **dadurch gekennzeichnet, dass** das schwenkbare reflektierende Element im Kalibriermodus angepasst an Querschnittsform und Größe des Messlichtschachtes (5) aperturfüllend in den Messlichtschacht (5) einklappbar ist.

13. Vorrichtung nach Anspruch 11 oder 12, **dadurch gekennzeichnet, dass** das schwenkbare reflektierende Element für den Kalibriermodus als reflexiver Diffusor (42) ausgebildet ist.

14. Vorrichtung nach Anspruch 13, **dadurch gekennzeichnet, dass** bei in den Kalibrierschacht (2) eingeklapptem reflektierendem Element ein Dunkelsignal des Sensors aufnehmbar ist, wenn im Abbildungsmodus bei Nacht über offenem Meer auf genommen wird.

15. Vorrichtung nach Anspruch 14, **dadurch gekennzeichnet, dass** eine Mehrpunktkalibrierung mit fünf Kalibrierzuständen mittels zweier Filterplatten (37, 38) unterschiedlicher Strahlungsdämpfung unter Ausnutzung von vier Zuständen der Filterplatten (37, 38), die alle Permutationen von möglichen Verschlusszuständen des Kalibrierschachtes (2) mit den Filterplatten (37, 38) beinhalten, und eines Zustandes mit im Abbildungsmodus bei Nacht über offenem Meer realisiert ist.

## Claims

1. A device for the radiometric calibration of optoelectronic sensors exposed to a reference radiation source via a calibration beam path in order to determine their sensitivity, consisting of various filters having different transmittance in order to attain stepwise defined, different conditions of attenuation of the incident reference beam, which filters can be introduced into the calibration beam path, **characterised in that** the device includes a reference light shaft, and **in that**
the filters can be serially pivoted, in an aperture-filling manner, into the reference light shaft (2) which limits the calibration beam path, in the form of a limited number of filter plates (3; 31, 32) provided as pivoting filter flaps with systematically stepped transmission structures, so that the filters, both individually and in combination, generate a number of defined, reproducibly stepped conditions of attenuation of the light from the reference radiation source (1) which exceeds the number of filter plates (3; 31, 32).

2. The device according to claim 1, **characterised in that** the filter plates are perforated plates (34).

3. The device according to claim 1, **characterised in that** the filter plates are transparent plates (35) with opaque surface elements (36).

4. The device according to claim 1, **characterised in that** a diffuser (4) is arranged downstream of the filter plates.

5. The device according to claim 4, **characterised in that** the diffuser (4) is a transmitting diffuser (41).

6. The device according to claim 4, **characterised in that** the diffuser (4) is a reflective diffuser (42).

7. The device according to claim 1, **characterised in that** the filter plates (3; 31, 32) are fixed to an end of the calibration light shaft (2) in an inwardly foldable manner.

8. The device according to claim 1, **characterised in that** the calibration light shaft (2) is arranged orthogonal to a measurement light shaft (5) of an optical sensor system (7, 8), which calibration light shaft (2) can be coupled into the measurement light shaft (5) before all optical components (7) of the sensor (8) by means of a pivoting reflective element so that, in a calibration mode, the sensor system (7, 8) is alternatively illuminated with calibration light of several different conditions of attenuation from the reference light source (1).

9. The device according to claim 8, **characterised in that** the pivoting reflective element is a mirror.

10. The device according to claim 8, **characterised in that** the pivoting reflective element is a reflective diffuser (42).

11. The device according to claim 8, **characterised in that**, in the measurement mode, the pivoting reflective element can be folded into the calibration light shaft (2) in an aperture-filling manner, adapted to the cross-sectional shape and size of the calibration light shaft (2).

12. The device according to claim 8, **characterised in that**, in the calibration mode, the pivoting reflective element can be folded into the measurement light shaft (5) in an aperture-filling manner, adapted to the cross-sectional shape and size of the measurement light shaft (5).

13. The device according to claim 11 or 12, **characterised in that** the pivoting reflective element is provided as a reflective diffuser (42) for the calibration mode.

14. The device according to claim 13, **characterised in that**, with the reflective element folded into the calibration shaft (2), a dark signal of the sensor can be recorded when recording in the imaging mode at night above the open sea.

15. The device according to claim 14, **characterised in that** a multi-point calibration with five calibration conditions is attained by means of two filter plates (37, 38) with different levels of beam attenuation, utilizing four conditions of the filter plates (37, 38), which include all permutations of possible closing conditions of the calibration shaft (2) with the filter plates (37, 38), and one condition comprising recording in the imaging mode at night above the open sea..

## Revendications

1. Dispositif de calibrage radiométrique de capteurs optoélectroniques exposés à une source de rayonnement de référence par un chemin optique de calibrage afin de déterminer leur sensibilité, consistant de plusieurs filtres ayant chacun une transmission différente pour réaliser différentes conditions d'atténuation graduellement définies du rayonnement de référence incident, lesdits filtres pouvant être insérés dans le chemin optique de calibrage, **caractérisé en ce que** le dispositif comprend une prise de lumière de référence et **en ce que** les filtres peuvent être pivotés les uns après les autres, de manière à remplir l'ouverture optique, dans la prise de lumière de référence (2) délimitant le chemin optique de calibrage, sous forme d'un nombre limité de plaques de filtrage (3; 31, 32) réalisées en tant que volets de filtrage pivotants présentant des structures de transmission systématiquement graduées, de sorte que les filtres engendrent, soit individuellement ou en combinaison, un nombre de conditions d'atténuation définies et graduées de façon reproductible de la lumière émis par la source de rayonnement de référence (1), ce nombre étant supérieur au nombre de plaques de filtrage (3; 31, 32).

2. Dispositif selon la revendication 1, **caractérisé en ce que** les plaques de filtrage sont des plaques perforées (34).

3. Dispositif selon la revendication 1, **caractérisé en ce que** les plaques de filtrage sont des plaques transparentes (35) présentant des éléments de surface opaques (36).

4. Dispositif selon la revendication 1, **caractérisé en ce qu'**un diffuseur (4) est disposé en aval des plaques de filtrage.

5. Dispositif selon la revendication 4, **caractérisé en ce que** le diffuseur (4) est un diffuseur de transmission (41).

6. Dispositif selon la revendication 4, **caractérisé en ce que** le diffuseur (4) est un diffuseur de réflexion (42).

7. Dispositif selon la revendication 1, **caractérisé en ce que** les plaques de filtrage (3, 31, 32) sont attachées à une extrémité de la prise de lumière de calibrage (2) de manière pliable vers l'intérieur.

8. Dispositif selon la revendication 1, **caractérisé en ce que** la prise de lumière de calibrage (2) est disposée de façon orthogonale par rapport à une prise de lumière de mesure (5) d'un système de capteur optique (7, 8), cette prise de lumière de calibrage (2) pouvant être couplée dans la prise de lumière de mesure (5) avant tous les composants optiques (7) du capteur (8) au moyen d'un élément de réflexion pivotant permettant l'illumination alternative, dans un mode de calibrage, du système à capteurs (7, 8) avec de la lumière de calibrage de différentes conditions d'atténuation émise par la source de lumière de référence (1).

9. Dispositif selon la revendication 8, **caractérisé en ce que** l'élément de réflexion pivotant est un miroir.

10. Dispositif selon la revendication 8, **caractérisé en ce que** l'élément de réflexion pivotant est un diffuseur de réflexion (42).

11. Dispositif selon la revendication 8, **caractérisé en ce que**, dans le mode de mesure, l'élément de réflexion pivotant est pliable dans la prise de lumière de calibrage (2) de manière à remplir l'ouverture optique, s'adaptant à la section transversale et à la taille de la prise de lumière de calibrage (2).

12. Dispositif selon la revendication 8, **caractérisé en ce que**, dans le mode de calibrage, l'élément de réflexion pivotant est pliable dans la prise de lumière de mesure (5) de manière à remplir l'ouverture optique, s'adaptant à la section transversale et à la taille de la prise de lumière de mesure (5).

13. Dispositif selon la revendication 11 ou 12, **caractérisé en ce que** l'élément de réflexion pivotant est réalisé en tant que diffuseur de réflexion (42) pour le mode de calibrage.

14. Dispositif selon la revendication 13, **caractérisé en ce que**, l'élément de réflexion plié vers l'intérieur de la prise de lumière de calibrage (2), un signal d'obscurité du capteur peut être enregistré lors de l'enregistrement dans le mode d'imagerie de nuit au-dessus de la pleine mer.

15. Dispositif selon la revendication 14, **caractérisé en ce qu'**un calibrage multi-point à cinq conditions de calibrage est réalisée au moyen de deux plaques de filtrage (37, 38) présentant différents niveaux d'atténuation de rayonnement, par exploitation de quatre conditions des plaques de filtrage (37, 38) comprenant toutes les permutations des conditions de fermeture potentielles de la prise de lumière de calibrage (2) par les plaques de filtrage (37, 38), et une condition comprenant l'enregistrement dans le mode d'imagerie de nuit au-dessus de la pleine mer.
